# EUROPÄISCHE PATENTSCHRIFT

(11) **EP 0 873 912 B1**
(45) Veröffentlichungstag und Bekanntmachung des Hinweises auf die Patenterteilung: **29.12.2004**
(21) Anmeldenummer: 98105358.0
(22) Anmeldetag: 25.03.1998
(51) Int. Cl.: B60R 16/02

(54) **Leitungsführung für ein Kraftfahrzeug**
Pipe guide for a vehicle
Guide de tuyaux pour un véhicule

(30) Priorität: 23.04.1997 DE 19717041
(43) Veröffentlichungstag der Anmeldung: 28.10.1998
(73) Patentinhaber: DaimlerChrysler AG, 70567 Stuttgart (DE)
(72) Erfinder: Proschek, Walter, 70567 Stuttgart (DE)

(56) Entgegenhaltungen:
- EP-A- 0 243 839
- EP-A- 0 275 575
- FR-A- 2 616 390
- PATENT ABSTRACTS OF JAPAN vol. 018, no. 478 (P-1796), 6. September 1994 (1994-09-06) & JP 06 160344 A (MATSUSHITA ELECTRIC IND CO LTD), 7. Juni 1994 (1994-06-07)

## Beschreibung

Die Erfindung betrifft eine Leitungsführung für ein Kraftfahrzeug mit einer Abdeckung, insbesondere einem Heckdeckel, für eine Kraftfahrzeugöffnung gemäß dem Oberbegriff des Anspruchs 1, wobei in der Abdeckung elektrische und/oder fluidische Baugruppen angeordnet sind.

Bei modernen Kraftfahrzeugen sind verschiedene elektrische und/oder fluidische Baugruppen, wie beispielsweise Rückleuchten verschiedener Art, Bremsleuchten, Rückfahrscheinwerfer, Nebelschlußleuchten usw., Antennensysteme, Sensorsysteme oder pneumatische Verbraucher wie Stellglieder für eine Schließvorrichtung oder für einen versenkbaren Griff, in die verschiedenen Abdeckungen für Kraftfahrzeugöffnungen, beispielsweise in den Heckdeckel, integriert. Zum Anschluß der genannten Baugruppen an eine Strom- oder Fluidversorgung oder an ein Steuergerät muß mindestens eine Leitung vorgesehen sein, welche hierzu einen Abstand zwischen einem Karosserieteil und einer Abdeckung überbrückt, wobei unter einer Leitung sowohl ein elektrisches Kabel als auch ein Fluidschlauch verstanden wird. Die Überbrückung des Abstands zwischen dem Karosserieteil und der Abdeckung muß auch bei einer Bewegung der Abdeckung zwischen ihren beiden Endlagen sichergestellt sein. Zu diesem Zweck werden bei Fahrzeugen gemäß dem Stand der Technik, beispielsweise bei der Baureihe W 140 der Anmelderin, die mindestens eine Leitung von einem Steuergerät oder einer elektrischen oder fluidischen Versorgungseinrichtung innerhalb von Karosserieteilen, beispielsweise Holmen oder Trägern, und/oder zwischen den Karosserieteilen und Karosserieverkleidungsteilen bis zu einem Durchbruch mit einer Karosseriedurchführung geführt, von dort wird die mindestens eine Leitung durch die Karosseriedurchführung zu einem Schanierhebel, welcher Teil eines Heckdeckelschaniers ist, geführt. Anschließend wird die mindestens eine Leitung innerhalb es Schanierhebels zu einem Durchbruch mit einer Abdeckungsdurchführung in der Abdeckung und/oder einem Abdeckungsverkleidungsteil geführt, wo die mindestens eine Leitung in den hohlen Bereich des Heckdeckels eintritt und weiter zu den Baugruppen verteilt wird. Üblicherweise sind die Durchführungen als Gummitüllen ausgeführt.

Als nachteilig kann dabei angesehen werden, daß wenn die Schwenkscharniere im sogenannten Naßbereich angeordnet sind, d. h. in einem Bereich, in dem sich bei Regenfahrten in vermehrtem Maße Wasser ansammelt, die mindestens eine Leitung in einem verstärkten Maß einer Belastung durch Witterungseinflüsse (Feuchtigkeit, Kälte) ausgesetzt ist, wodurch es zu einer schnelleren Materialermüdung kommt, und die erwähnten Durchbrüche in den Karosserieteilen und in der Abdeckung zur Korrosion neigen. Zudem besteht bei mehrteiligen Schwenkscharnieren, welche nicht nur eine einfache Drehbewegung ausführen die Gefahr, daß die mindestens eine Leitung gequetscht und/oder geknickt wird.

Die DE 38 72 735 T2 bzw. EP 0282389 A offenbart eine gattungsgemäße Leitungsführung für ein Kraftfahrzeug mit einer karosserieseitig angelenkten Abdeckung für eine Kraftfahrzeugöffnung, wobei zum Anschluß von in der Abdeckung angeordneten Baugruppen mindestens eine Leitung vorgesehen ist, welche hierzu einen Abstand zwischen einem Karosserieteil und der Abdeckung überbrückt, wobei die Abdeckung zwischen einer ersten und einer zweiten Endlage bewegbar ist, wobei eine Rückzugseinrichtung vorgesehen ist, welche zur Anpassung der mindestens einen Leitung an den sich beim Bewegen der Abdeckung zwischen ihren beiden Endlagen ändernden Abstand eine Kraft auf die mindestens eine Leitung ausübt und wobei die mindestens eine Leitung unter Mitwirkung der ausgeübten Kraft karosserieseitig oder abdeckungsseitig verschoben wird.

Als nachteilig kann dabei angesehen werden, daß keine Maßnahmen vorgesehen sind, um eine Beschädigung der mindestens einen Leitung, insbesondere einer fluidischen Leitung, durch Knicken, Quetschen oder Scheuern an einer Kante zu verhindern.

Aufgabe der Erfindung ist es, eine Leitungsführung für ein Kraftfahrzeug mit einer Abdeckung für eine Kraftfahrzeugöffnung anzugeben, mit welcher sich die erwähnten Nachteile vermeiden lassen.

Diese Aufgabe wird erfindungsgemäß mit den Merkmalen des Anspruchs 1 gelöst, wobei die Merkmale der Unteransprüche vorteilhafte Ausgestaltungen und Weiterbildungen kennzeichnen.

Der Hauptgedanke der Erfindung besteht darin, zur Anpassung von mindestens einer Leitung an einen sich zwischen einem Karosserieteil und einer Abdeckung beim Bewegen der Abdeckung zwischen zwei Endlagen ändernden Abstand die mindestens eine Leitung karosserieseitig und/oder abdeckungsseitig verschiebbar auszuführen, wobei zum Verschieben der mindestens einen Leitung eine Rückzugseinrichtung vorgesehen wird, welche auf die mindestens eine Leitung eine Kraft ausübt, wodurch in vorteilhafter Weise sichergestellt wird, daß die mindestens eine Leitung zur Überbrückung des Abstands zwischen dem Karosserieteil und der Abdeckung entlang einer Ideallinie in einem gespannten Zustand geführt wird, wobei die Ideallinie nicht der kürzesten Verbindungslinie zwischen dem Karosserieteil und der Abdeckung entsprechen muß, sondern nur sicherstellt, daß die zulässige Biegebeanspruchung der mindestens einen Leitung nicht überschritten wird, und daß die mindestens eine Leitung nicht an Kanten oder ähnlichem scheuert, um eine Beschädigung der mindestens einen Leitung zu vermeiden. Durch den gespannten Zustand der mindestens einen Leitung wird zusätzlich verhindert, daß die mindestens eine Leitung Schlingen bilden kann, in denen sich Gegenstände einhängen können, was ebenfalls zu einer Beschädigung der mindestens einen Leitung führen kann. Als Abstand zwischen dem Karosserieteil und der Abdeckung wird in der weiteren Beschreibung der Abstand zwischen einer Karosseriedurchführung und einer Abdeckungsdurchführung, durch welche die mindestens eine Leitung geführt wird, verstanden.

Zur Leitungsführung wird zusätzlich zur Rückzugseinrichtung ein Ablageraum zur Aufnahme einer bestimmten Leitungsüberlänge vorgesehen, wobei diese Leitungsüberlänge mittels der Krafteinwirkung der Rückzugseinrichtung auf die mindestens eine Leitung beim Bewegen der Abdeckung von einer zweiten in eine erste Endlage in den vorgesehenen Ablageraum zurückgezogen wird, und wobei beim Bewegen der Abdeckung von der ersten in die zweite Endlage zur Freigabe der Leitungsüberlänge aus dem Ablageraum die Krafteinwirkung der Rückzugseinrichtung auf die mindestens eine Leitung überwunden werden muß. Die Rückzugseinrichtung und der Ablageraum können dabei karosserieseitig innerhalb der Karosserie und/oder zwischen der Karosserie und einem Karosserieverkleidungsteil oder abdeckungsseitig in einem Hohlraum der Abdeckung und/oder zwischen der Abdeckung und einem Abdeckungsverkleidungsteil angeordnet sein. Bei der karosserieseitigen Anordnung ist die mindestens eine Leitung in der Korosseriedurchführung verschiebbar und in der Abdeckungsdurchführung fest ausgeführt. Bei der abdeckungsseitigen Anordnung ist die mindestens eine Leitung in der Karosseriedurchführung fest und in der Abdeckungsdurchführung verschiebbar angeordnet.

Bei einer besonders vorteilhaften Ausgestaltung der Erfindung ist die Rückzugseinrichtung und der Ablageraum in ein Gehäuse integriert, wobei das Gehäuse karosserieseitig im Kofferraum zwischen der Karosserie und einem Karosserieverkleidungsteil angeordnet ist. Es ist aber auch denkbar das Gehäuse in einem hohlen Bereich der Abdeckung oder zwischen der Abdeckung und einer Abdeckungsverkleidung anzuordnen. Abhängig von der _{A}nordnung des Gehäuses ist die mindestens eine Leitung entweder in der Karosseriedurchführung oder in der Abdeckungsdurchführung verschiebbar ausgeführt, wobei die Karosseriedurchführung oder die Abdeckungsdurchführung als Teil der Rückzugseinrichtung ausgeführt sein können. Durch die Krafteinwirkung der Rückzugseinrichtung auf die mindestens eine Leitung, bleibt diese immer gespannt, wodurch ein Quetschen und/oder Knicken der mindestens einen Leitung beim Bewegen der Abdeckung zwischen ihren Endlagen nahezu vermieden wird.

Durch die beschriebenen Merkmale kann die Leitungsführung der mindestens einen Leitung unabhängig von vorhandenen Schaniereinrichtungen vorgenommen werden und deshalb immer innerhalb des Trockenbereichs des Fahrzeugs geführt werden, wodurch die mindestens eine Leitung nicht den Witterungseinflüssen ausgesetzt ist und eine vorzeitige Materialermüdung vermieden wird.

Im folgenden werden in der Zeichnung dargestellte Ausführungsbeispiele der Erfindung erläutert; es zeigen:
- Fig. 1: schematische Darstellung eines Kraftfahrzeugs mit Abdeckungen;
- Fig. 2: schematische Darstellung eines Details des Kraftfahrzeugs;
- Fig. 3: schematische Darstellung einer Leitungsführung;
- Fig. 4: schematische Darstellung der Leitungsführung in einer ersten Endlage der Abdeckung;
- Fig. 5: schematische Darstellung der Leitungsführung in einer zweiten Endlage der Abdeckung;
- Fig. 6: schematische Darstellung einer Ausführungsform einer Rückzugseinrichtung;

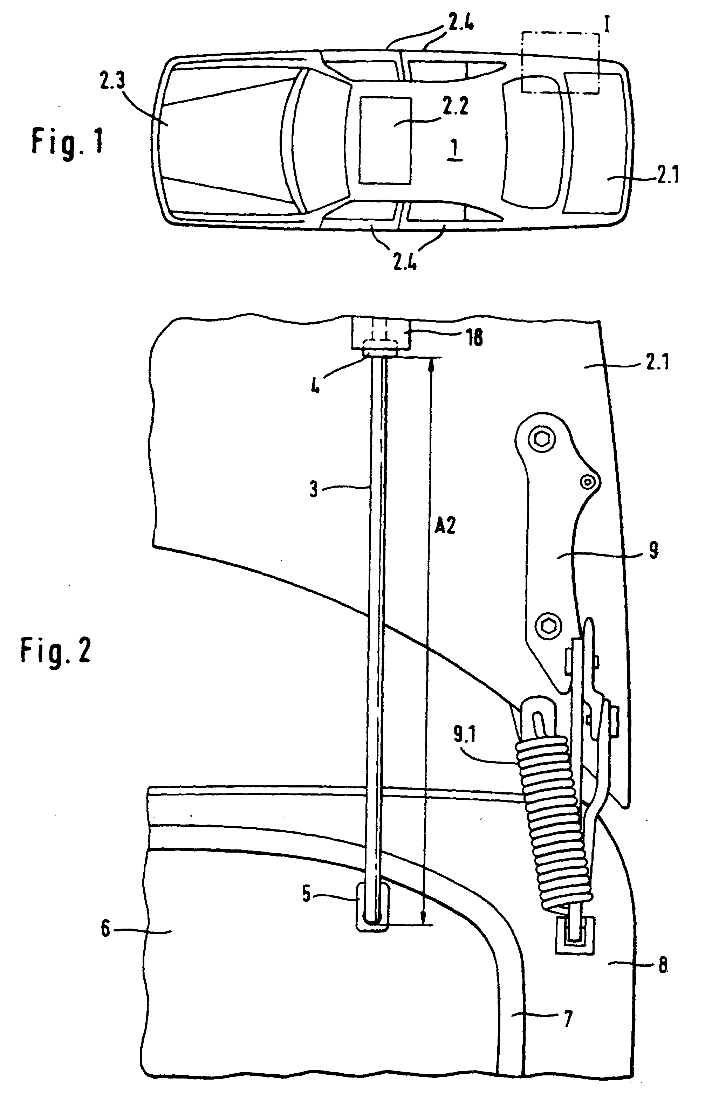

Fig. 1 zeigt ein Kraftfahrzeug 1 mit verschiedenen Abdeckungen für Kraftfahrzeugöffnungen wie beispielsweise einen Heckdeckel 2.1, ein Schiebedach 2.2, eine Motorhaube 2.3 und mehrere Türen 2.4, wobei der Heckdeckel 2.1 in einer ersten Endlage (geschlossen) dargestellt ist.

Fig. 2 zeigt eine vergrößerte Darstellung eines mit I bezeichneten Ausschnitts aus Fig. 1, wobei der Heckdeckel 2.1 in einer zweiten Endlage (geöffnet) dargestellt ist. Der Heckdeckel 2.1 ist mittels einer Schanieranordnung 9 mit Entlastungsfeder 9.1 karosserieseitig angelenkt und kann zwischen zwei Endlagen bewegt werden. Zum Anschluß von nicht dargestellten im Heckdeckel angeordneten elektrischen oder fluidischen Baugruppen an nicht dargestellte karosserieseitige Steuergeräte oder fluidische oder elektrische Versorgungseinrichtungen wird mindestens eine Leitung 3 benutzt. Die mindestens eine Leitung 3 überbrückt dabei einen Abstand A2 zwischen einer Karosseriedurchführung 5 und einer Abdeckungsdurchführung 4. Nach der Abdeckungsdurchführung wird die mindestens eine Leitung 3 innerhalb eines Abdeckungshohlraums 18 weitergeführt und an die entsprechenden Baugruppen verteilt. Wie aus der Darstellung ersichtlich ist, befindet sich die Leitungsführung zwischen der Karosseriedurchführung 5 und der Abdeckungsdurchführung 4 bei geschlossenem Heckdeckel 2.1 (Abdeckung befindet sich in der ersten Endlage) innerhalb des sogenannten Trockenbereichs 6 des Kofferraums, welcher durch eine Dichtungsanordnung 7 vom sogenannten Naßbereich 8 getrennt ist.

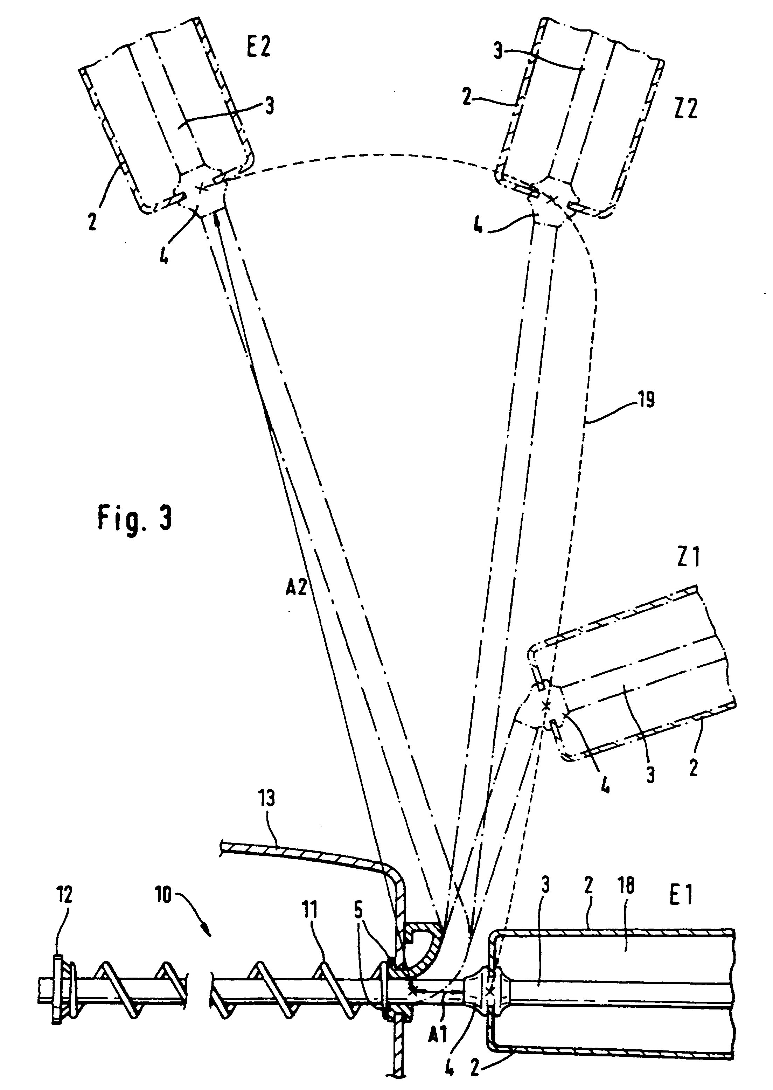

Wie aus der Fig. 3 ersichtlich ist umfaßt eine Leitungsführung für eine Kraftfahrzeug mit einer karosserieseitig angelenkten Abdeckung 2 für eine Kraftfahrzeugöffnung mindestens eine Leitung 3, eine Karosseriedurchführung 5, welche in einem Durchbruch durch ein Karosserie- oder ein Karosserieverkleidungsteil 13 angeordnet ist, eine Abdeckungsdurchführung 4, welche in einem Durchbruch der Abdeckung oder eines Abdeckungsverkleidungsteils 2 angeordnet ist, und eine karosserieseitig angeordnete Rückzugseinrichtung 10, welche hier als Druckfeder 11 mit Anschlagring 12 ausgebildet ist. Die mindestens eine Leitung 3 wird zum Anschluß von nicht dargestellten elektrischen und/oder fluidischen Baugruppen an nicht dargestellte karosserieseitig angeordnete Steuergeräte oder elektrische oder fluidische Versorgungseinrichtungen verwendet. Zu diesem Zweck überbrückt die mindestens eine Leitung 3 einen Abstand zwischen der Karosseriedurchführung 5 und der Abdeckungsdurchführung 4, wobei die Abdeckung 2 zwischen einer ersten und einer zweiten Endlage E1, E2 bewegbar ist. Auf Grund der Bewegung der Abdeckung 2 zwischen ihren Endlagen E1, E2 ändert sich der Abstand, wobei der Abstand Werte zwischen einem minimalen Abstand A1, welcher hier in der ersten Endlage E1 der Abdeckung 2 vorliegt, und einem maximalen Abstand A2, welcher hier in der zweiten Endlage E2 der Abdeckung 2 vorliegt, annehmen kann. Die Bewegung der Abdeckung 2 zwischen ihren beiden Endlagen E1, E2 erfolgt dabei entlang einer gestrichelt dargestellten Bewegungslinie 19, welche durch die in Fig. 2 dargestellte mehrteilige Schanieranordnung 9, welche die Abdeckung 2 mit dem Karosserieteil 13 verbindet, vorgegeben wird. In der Darstellung sind neben der Endlage E1 noch die Endlage E2 und zwei Zwischenstellungen Z1, Z2, welche die Abdeckung bei ihrer Bewegung zwischen ihren beiden Endlagen E1, E2 durchläuft, gestrichelt dargestellt. Die Rückzugseinrichtung 10 besteht bei der dargestellten Ausgestaltung aus einer Druckfeder 11 und einem Anschlagring 12 für die Druckfeder 11, wobei der Anschlagring 12 fest mit der mindestens einen Leitung verbunden ist. Alternativ kann der Anschlagring 12 als Teil einer Leitungshülle ausgebildet und an diese angeformt sein.

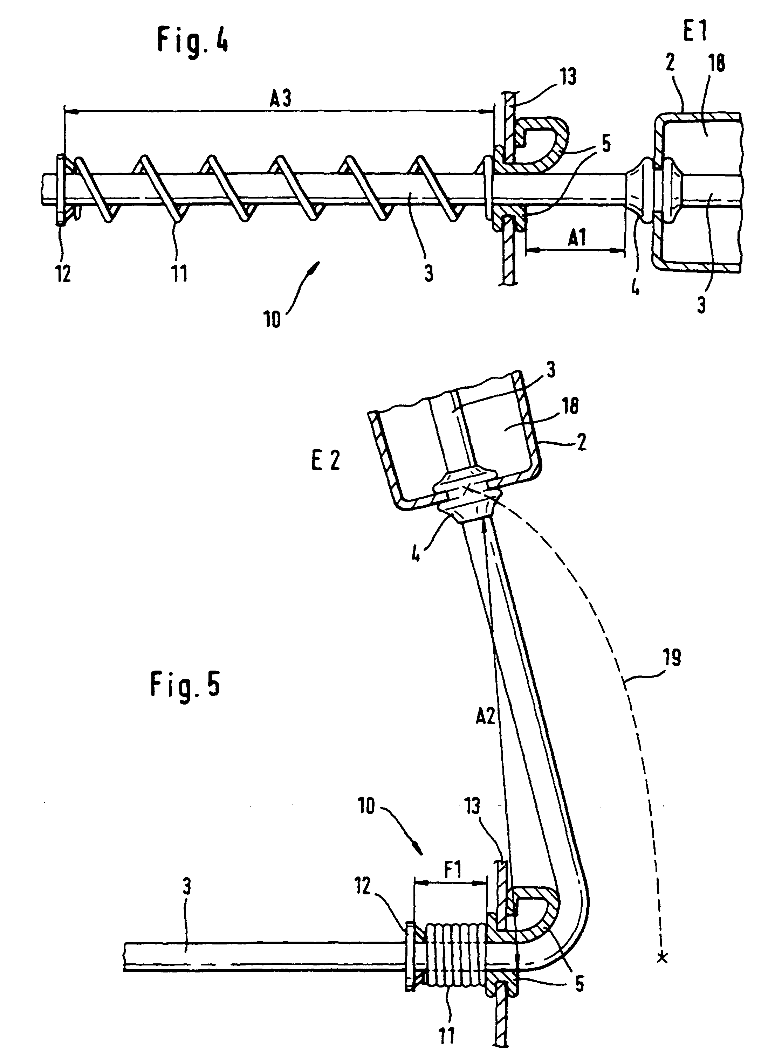

Fig. 4 zeigt die Leitungsführung für ein Kraftfahrzeug, bei welcher sich die Abdeckung 2 für eine Kraftfahrzeugöffnung in ihrer ersten Endlage E1 befindet. Die Darstellung zeigt eine einfache karosserieseitige Ausführung der Rückzugseinrichtung 10 mit einer Druckfeder 11 und einem Anschlagring 12, alternativ ist es vorstellbar statt der Druckfeder eine Zugfeder zu verwenden. Wie aus Fig. 4 ersichtlich ist, überbrückt die mindestens eine Leitung 3 in dieser Lage der Abdeckung 2 den minimalen Abstand A1 zwischen der Karosseriedurchführung 5 und der Abdeckungsdurchführung 4. Die Druckfeder 11 der Rückzugseinrichtung 10 befindet sich dabei in einer entspannten Lage und hält eine Leitungsüberlänge zur Anpassung an den sich bei einer Bewegung der Abdeckung 2 ändernden Abstand zwischen der Karosseriedurchführung 5 und der Abdeckungsdurchführung 4 in einem dafür vorgesehenen Ablageraum innerhalb eines Hohlraums in einem Karosserieteil oder zwischen einem Karosserieteil und einem Karosserieverkleidungsteil zurück. Die Größe des notwendigen Ablageraums hängt von der notwendigen Leitungsüberlänge zur Überbrückung eines maximalen Abstands A2 (siehe Fig. 5) zwischen der Karosseriedurchführung 5 und der Abdeckungsdurchführung 4 ab. Die Leitungsüberlänge entspricht dem Abstand A3 des Anschlagrings 12 von der Karosseriedurchführung 5 und besteht mindestens aus der Summe des maximalen Abstands A2 und der Druckfederlänge F1 (siehe Fig. 5) im vollständig gespannten Zustand der Druckfeder 11 (A3 = A2 + F1 ).

Fig. 5 zeigt die Leitungsführung für ein Kraftfahrzeug, bei welcher sich die Abdeckung 2 für eine Kraftfahrzeugöffnung in ihrer zweiten Endlage E2 befindet. Wie aus der Fig. 5 ersichtlich ist, überbrückt die mindestens eine Leitung 3 in dieser Lage der Abdeckung 2 entlang einer Ideallinie den maximalen Abstand A2 zwischen der Karosseriedurchführung 5 und der Abdekkungsdurchführung 4. Die Druckfeder 11 der Rückzugseinrichtung 10 befindet sich dabei in einem gespannten Zustand und die Leitungsüberlänge wird zur Überbrückung des maximalen Abstands A2 verwendet. Bei einer Bewegung der Abdeckung 2 entlang der gestrichelt dargestellten Bewegungslinie 19, welche beispielsweise von einer in der Fig. 2 dargestellten mehrteiligen Schanieranordnung 9 vorgegeben wird, werden entsprechend dem sich ändernden Abstand zwischen der Karosseriedurchführung 5 und der Abdeckungsdurchführung 4 Teile der Leitungsüberlänge zur Anpassung der mindestens einen Leitung 3 an den sich ändernden Abstand benutzt. Durch die Krafteinwirkung der Rückzugseinrichtung 10 auf die mindestens eine Leitung 3 wird immer nur ein Teil der Leitungsüberlänge zur Anpassung der mindestens einen Leitung 3 an den sich ändernden Abstand freigegeben. Dadurch wird nahezu verhindert, daß die mindestens eine Leitung 3 unnötige Schleifen bildet in denen sich Gegenstände einhängen und die mindestens eine Leitung 3 beschädigen können.

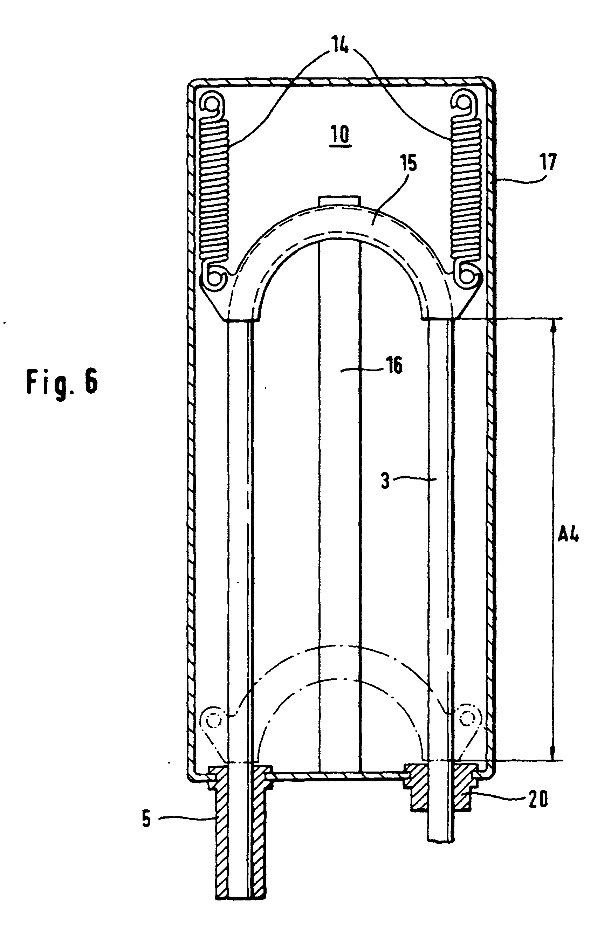

Fig. 6 zeigt eine besonders vorteilhafte Ausgestaltung der Rückzugseinrichtung 10. Wie aus der Darstellung ersichtlich ist umfaßt die Rückzugseinrichtung 10 ein Gehäuse 17, einen entlang einer Linearführung 16 bewegbaren Schlitten 15 zur Führung der mindestens einen Leitung 3, eine Federeinrichtung 14, welche zwei Zugfedern umfaßt, wobei die Zugfedern mit einem Ende mit dem bewegbaren Schlitten 15 und mit dem anderen Ende mit dem Gehäuse 17 verbunden sind, und eine Leitungsdurchführung 20, in welcher die mindestens eine Leitung 3 nicht verschiebbar fixiert ist. Als zweite Leitungsdurchführung, in welcher die mindestens eine Leitung 3 verschiebbar angeordnet ist wird die Karosseriedurchführung 5 verwendet. Befindet sich die Abdeckung 2 in ihrer ersten Endlage, dann befindet sich der bewegbare Schlitten 15 am oberen Ende der Linearführung 16 und die Zugfedern der Federeinrichtung 14 sind entspannt. Die Leitungsüberlänge zur Anpassung der Leitung 3 an den sich ändernden Abstand befindet sich vollständig innerhalb des Gehäuses 17 der Rückzugseinrichtung 10. Zu diesem Zweck wird die mindestens eine Leitung 3 nach der Leitungsdurchführung 20 innerhalb des Gehäuses 17 über den bewegbaren Schlitten 15 zu der Karosseriedurchführung 5 geführt. Befindet sich die Abdeckung 2 in ihrer zweiten Endlage, dann befindet sich der bewegbare Schlitten 15 (gestichelt dargestellt) am unteren Ende der Linearführung 16 und die beiden Zugfedern der Federeinrichtung 14 sind gespannt. Die Leitungsüberlänge zur Anpassung der Leitung 3 an den sich ändernden Abstand befindet sich vollständig außerhalb des Gehäuses 17 der Rückzugseinrichtung 10 und wird zum Überbrücken des maximalen Abstands A2 zwischen der Karosseriedurchführung 5 und der Abdeckungsdurchführung 4 verwendet. In den halbkreisförmigen Schlitten ist vorteilhafterweise eine Führungsnut zur Leitungsführung ausgeformt, wobei der Radius der Führungsnut so gewählt wird, daß die maximale Biegebeanspruchung der mindestens einen Leitung nicht überschritten wird. Durch diese Maßnahme wird einer vorzeitigen Materialermüdung der mindestens einen Leitung 3 vorgebeugt. Anstelle der Führungsnut können aber auch mehrere Rollen zur Führung der mindestens einen Leitung an dem bewegbaren Schlitten angeordnet sein. Ein weiterer Vorteil der Ausgestaltung nach Fig. 6 besteht darin, daß durch die Umlenkeigenschaft des bewegbaren Schlittens 15 sich die Tiefe des notwendigen Ablageraums zur Aufnahme der erforderlichen Leitungsüberlänge halbiert. Die notwendige Leitungsüberlänge entspricht bei dieser Ausführungsform dem doppelten des Abstands A4 des bewegbaren Schlitten zur Leitungsdurchführung 20. Alternativ sind noch andere Ausgestaltungen der Federeinrichtung 14 möglich, so können anstatt der Zugfedern auch Druckfedern verwendet werden oder anstatt zwei Federn kann auch nur eine Feder verwendet werden. Die dargestellte Rückzugsvorrichtung 10 kann in einem Karosseriehohlraum oder in einem Hohlraum zwischen einem Karosserieteil und einem Karosserieverkleidungsteil angeordnet sein.

Die Erfindung wurde zwar nur für die Anwendung mit einem Heckdeckel als Abdeckung für eine Kraftfahrzeugöffnung näher ausgeführt, sie ist aber nicht auf diese Anwendung beschränkt, da die Erfindung durch einen Fachmann auf einfache Weise auf andere Anwendungen z. B. auf Schiebedächer, Schiebetüren, Motorhauben usw. übertragen werden kann.

## Patentansprüche

1. Leitungsführung für ein Kraftfahrzeug mit einer karosserieseitig angelenkten Abdeckung, insbesondere einem Heckdeckel, für eine Kraftfahrzeugöffnung,
- wobei zum Anschluß von in der Abdeckung angeordneten Baugruppen mindestens eine Leitung vorgesehen ist, welche hierzu einen Abstand zwischen einem Karosserieteil und der Abdeckung überbrückt,
- wobei die Abdeckung zwischen einer ersten und einer zweiten Endlage bewegbar ist,
- wobei eine Rückzugseinrichtung vorgesehen ist, welche zur Anpassung der mindestens einen Leitung an den sich beim Bewegen der Abdeckung zwischen ihren beiden Endlagen ändernden Abstand eine Kraft auf die mindestens eine Leitung ausübt,
- wobei die mindestens eine Leitung unter Mitwirkung der ausgeübten Kraft karosserieseitig und/oder abdeckungsseitig verschoben wird,
**dadurch gekennzeichnet,**
**daß** die mindestens eine Leitung (3) unter Mitwirkung der ausgeübten Kraft entlang einer Ideallinie durch eine Karosseriedurchführung (5) und eine Abdeckungsdurchführung (4) derart geführt wird, daß die zulässige Biegebeanspruchung der mindestens einen Leitung (3) nicht überschritten wird.

2. Leitungsführung für ein Kraftfahrzeug nach Anspruch 1,
**dadurch gekennzeichnet,**
**daß** an die Karosseriedurchführung (5) Führungsmittel angeformt sind, welche sicherstellen, daß ein bestimmter minimaler Biegeradius für die mindestens eine Leitung (3) nicht unterschritten wird.

3. Leitungsführung für ein Kraftfahrzeug nach Anspruch 1,
**dadurch gekennzeichnet,**
**daß** die Verschiebung der mindestens einen Leitung (3) karosserieseitig in der Karosseriedurchführung (5) und abdeckungsseitig in der Abdeckungsdurchführung (4) erfolgt.

4. Leitungsführung für ein Kraftfahrzeug nach Anspruch 1,
**dadurch gekennzeichnet,**
**daß** die Rückzugseinrichtung (10) karosserieseitig angeordnet ist.

5. Leitungsführung für ein Kraftfahrzeug nach Anspruch 3,
**dadurch gekennzeichnet,**
**daß** die Karosseriedurchführung (5) als Teil der Rückzugseinrichtung (10) ausgeführt ist.

6. Leitungsführung für ein Kraftfahrzeug nach Anspruch 1,
**dadurch gekennzeichnet,**
**daß** die Rückzugseinrichtung (10) abdeckungsseitig angeordnet ist.

7. Leitungsführung für ein Kraftfahrzeug nach Anspruch 1,
**dadurch gekennzeichnet,**
**daß** die mindestens eine Leitung (3) im Trockenbereich des Fahrzeugs geführt wird.

8. Leitungsführung für ein Kraftfahrzeug nach Anspruch 1,
**dadurch gekennzeichnet ,**
**daß** ein Gehäuse (17) vorgesehen ist, wobei das Gehäuse (17) die Rückzugseinrichtung (10) und einen Ablageraum umfaßt.

9. Leitungsführung für ein Kraftfahrzeug nach Anspruch 1,
**dadurch gekennzeichnet,**
**daß** die Rückzugseinrichtung (10) ein Gehäuse (17), eine Linearführung (16), einen in der Linearführung (16) bewegbaren Schlitten (15), eine Federeinrichtung (14), eine Leitungsdurchführung (20), in welcher die mindestens eine Leitung (3) fest angeordnet ist, und eine Karosseriedurchführung (5), in welcher die mindestens eine Leitung verschiebbar angeordnet ist, umfaßt.

## Claims

1. Line guide for a motor vehicle with a lid for a vehicle opening hinge-mounted on the bodywork, in particular a rear lid,
- whereby, as a means of connecting components disposed in the lid, at least one line is provided to bridge a distance between a bodywork part and the lid for this purpose,
- the lid being displaceable between a first and a second position,
- and a retraction unit is provided, which applies a force to the at least one line in order to adapt the at least one line to the change in distance as the lid is moved between its two end positions,
- the at least one line being shifted on the bodywork side and/or lid side under the effect of the force applied to it,
**characterised in that**
under the effect of the force applied, the at least one line (3) is guided along an ideal line through a bodywork grommet (5) and a lid grommet (4) so that the permissible bending stress of the at least one line (3) is not exceeded.

2. Line guide for a motor vehicle as claimed in claim 1,
**characterised in that**
guide means are formed on the bodywork grommet (5), to ensure that the bending radius for the at least one line (3) does not go below a specific minimum level.

3. Line guide for a motor vehicle as claimed in claim 1,
**characterised in that**
the at least one line (3) is shifted in the bodywork grommet (5) on the bodywork side and in the lid grommet (4) on the lid side.

4. Line guide for a motor vehicle as claimed in claim 1,
**characterised in that**
the retraction unit (10) is disposed on the bodywork side.

5. Line guide for a motor vehicle as claimed in claim 3,
**characterised in that**
the bodywork grommet (5) is designed as part of the retraction unit (10).

6. Line guide for a motor vehicle as claimed in claim 1,
**characterised in that**
the retraction unit (10) is disposed on the lid side.

7. Line guide for a motor vehicle as claimed in claim 1,
**characterised in that**
the at least one line (3) is guided in the dry area of the motor vehicle.

8. Line guide for a motor vehicle as claimed in claim 1,
**characterised in that**
a housing (17) is provided, which housing (17) incorporates the retraction unit (10) and a stowage compartment.

9. Line guide for a motor vehicle as claimed in claim 1,
**characterised in that**
the retraction unit (10) comprises a housing (17), a linear guide (16), a carriage (15) displaceable in the linear guide (16), a spring mechanism (14), a line grommet (20) in which the at least one line (3) is fixedly disposed and a bodywork grommet (5) in which the at least one line is slidable.

## Revendications

1. Guide de tuyaux pour un véhicule automobile avec un couvercle articulé côté carrosserie, en particulier un couvercle arrière pour une ouverture de véhicule automobile,
- au moins un tuyau étant prévu en vue du raccordement de blocs fonctionnels disposés dans le couvercle, ledit tuyau franchissant à cet effet un écartement entre une partie de carrosserie et le couvercle,
- le couvercle étant mobile entre une première et une seconde position finale,
- un dispositif de rappel étant prévu, lequel exerce une force sur le tuyau au nombre minimum d'un en vue d'adapter le tuyau au nombre minimum d'un à l'écartement se modifiant en cas de mouvement du couvercle entre ses deux positions finales,
- le tuyau au nombre minimum d'un étant déplacé côté carrosserie et/ou côté couvercle avec le concours de la force exercée,
**caractérisé en ce que**
le tuyau (3) au nombre minimum d'un est guidé avec le concours de la force exercée le long d'une ligne idéale à travers un passage de la carrosserie (5) et un passage du couvercle (4) de telle manière que l'effort de flexion admissible du tuyau (3) au nombre minimum d'un n'est pas dépassé.

2. Guide de tuyaux pour un véhicule automobile selon la revendication 1, **caractérisé en ce que** des moyens guide sont formés sur le passage de la carrosserie (5), qui garantissent que le tuyau (3) au nombre minimum d'un ne dépasse pas la limite inférieure d'un rayon de flexion minimal défini.

3. Guide de tuyaux pour un véhicule automobile selon la revendication 1, **caractérisé en ce que** le déplacement du tuyau (3) au nombre minimum d'un s'effectue côté carrosserie dans le passage de la carrosserie (5) et côté couvercle dans le passage du couvercle (4).

4. Guide de tuyaux pour un véhicule automobile selon la revendication 1, **caractérisé en ce que** le dispositif de rappel (10) est disposé côté carrosserie.

5. Guide de tuyaux pour un véhicule automobile selon la revendication 3, **caractérisé en ce que** le passage de la carrosserie (5) est réalisé sous forme de partie du dispositif de rappel (10).

6. Guide de tuyaux pour un véhicule automobile selon la revendication 1, **caractérisé en ce que** le dispositif de rappel (10) est disposé côté couvercle.

7. Guide de tuyaux pour un véhicule automobile selon la revendication 1, **caractérisé en ce que** le tuyau (3) au nombre minimum d'un est guidé dans la zone sèche du véhicule.

8. Guide de tuyaux pour un véhicule automobile selon la revendication 1, **caractérisé en ce qu'**un boîtier (17) est prévu, ledit boîtier (17) renfermant le dispositif de rappel (10) et un espace de réception.

9. Guide de tuyaux pour un véhicule automobile selon la revendication 1, **caractérisé en ce que** le dispositif de rappel (10) comprend un boîtier (17), un guide linéaire (16), un chariot (15) mobile dans le guide linéaire (16), un dispositif élastique (14), un passage du tuyau (20), dans lequel le tuyau (3) au nombre minimum d'un est disposé de manière fixe, et un passage de la carrosserie (5), dans lequel le tuyau au nombre minimum d'un est disposé de manière coulissante.
